# EUROPEAN PATENT SPECIFICATION

(11) **EP 3 490 908 B1**
(45) Date of publication and mention of the grant of the patent: **28.10.2020**
(21) Application number: 17742681.4
(22) Date of filing: 11.07.2017
(51) Int. Cl.: B65D 85/804

(54) **CAPSULE AND BEVERAGE PRODUCTION SYSTEM**
KAPSEL UND GETRÄNKEHERSTELLUNGSSYSTEM
CAPSULE ET SYSTÈME DE PRODUCTION DE BOISSON

(30) Priority: 26.07.2016 EP 16181219
(43) Date of publication of application: 05.06.2019
(73) Proprietor: Société des Produits Nestlé S.A., 1800 Vevey (CH)
(72) Inventor: MARTIN, Olivier, 1350 Orbe (CH); BEZET, Nicolas Jean-Guy, 7100 Macon (FR); LEININGER, Thierry, 67330 WEYER (FR)
(74) Representative: Ducreux, Marie
(86) International application number: PCT/EP2017/067373
(87) International publication number: WO 2018/019570

(56) References cited:
- WO-A1-2008/025730
- WO-A1-2009/115474
- WO-A1-2014/128647
- WO-A1-2014/184652
- WO-A2-2011/144479

## Description

### Field of the invention

The present invention relates to the field of producing beverages or other liquid comestibles on the basis of ingredients which are contained in a capsule.

### Background of the invention

The invention relates particularly to beverage production machines comprising a module with a first capsule engagement member, which can be displaced relative to a second co-operating capsule engagement member between an opened capsule insertion position and a closed capsule-enclosure position. The module comprises means for actively retracting the capsule from the beverage production position to a capsule discharge position in which the capsule is discharged from the module. Such a machine presents the advantage of having a capsule discharge position which is offset relative to the beverage production position. This advantage is of interest when the machine and the capsule are conceived for delivering the beverage directly out of the capsule in a cup without the beverage contacting the machine since it enables the discharge of the capsule in a position which is offset relative to the vertical of the beverage flow path. Such a beverage production machine is described in WO 2011/144479 A2, EP-A1-2033551, WO 2011/144479 or WO 2015/032651.

In such a machine, the capsule is introduced in the beverage production module, is retained by pre-fixation arms in a pre-engagement position and is then engaged by a first engagement member, of which internal shape matches the capsule shape further to the movement of the first engagement member to the capsule. At the end of this movement, the capsule is clamped between the first and the second engagement members and the diluent, generally hot water, can be introduced to interact with the ingredients in the capsule. The resulting beverage flows out of the capsule either through an outlet provided in the capsule or/and produced by the machine during the capsule engagement and falls by gravity in a cup. Once beverage has been delivered, the first engagement member moves back to the capsule discharge position dragging the capsule towards a position offset relative to the vertical of the beverage flow path and inside a capsule collecting bin. The movement of the first engagement member is a combination of a linear movement and an end swivelling movement so that the capsule can fall by gravity from the first engagement member.

The module comprises means for retaining the rim of the capsule extending beyond the first capsule engagement member when the first capsule engagement member is displaced from the beverage production position to its capsule discharge position. These means consist in two tabs symmetrically positioned or slightly offset on the lateral walls of the frame of the module and able to retain the rim of the capsule.

Presently capsules used with this machine commercialised under the trademark Special-T by Nestle are made of aluminium.

It has been noticed that these capsules can be easily and irremediably deformed during storage, in particular if they are stored in bulk. Actually, since the capsules are used as brewing chambers and must enable tea leaves opening, these capsules present rather big dimensions and tea leaves are not compacted inside. Consequently, external forces exerted on the aluminium foil lead to plastic deformation of the capsule wall leading to a less attractive aspect.

In order to avoid deformation, capsules are stored in specific packaging comprising trays wherein each capsule is prevented from contacting the other capsules. The solution is efficient but such packaging increases storage volume and is costly.

In order to provide non deformable capsules, it has been proposed to make capsules in plastic material. Yet it has been noticed that depending on the nature of the material the capsules are made of, different unforeseeable problems arose during beverage preparation.

First, when the capsules are made of plastic material by simply reproducing the same shape as the aluminium ones, it has been noticed that an important rate of capsules were not correctly ejected from the beverage preparation machine after beverage preparation. More precisely it was noticed that many capsules remained blocked between the capsule cage and the capsule collecting bin. For most of them, it was due to the fact that, at the time the capsules were ejected from the first capsule engagement member, they were not correctly oriented above the opening leading to the capsule collecting bin and remained trapped between said opening and the first capsule engagement member going back.

Additionally, once used for producing a beverage, the extracted capsules are deformed and do not present their original shape any longer. Precisely the lateral rounded sides of the capsule originally convex before use, become concave after extraction as if the capsule had been internally sucked. This change of shape can have a bad impact on the feeling of the user about the quality of the final beverage, specifically raising questions about a potential reaction between the plastic material and hot water, though there is no issue. This deformation happens during extraction and it was unexpected to face such a deformation by simply changing the nature of the material the capsule is made of.

It was also noticed that, when the capsules are fully made of plastic material, it becomes difficult for the user to manually actuate the machine. Indeed in this machine, the movement of capsule engagement members is due to the manual actuation of a lever by the user. The manual handling is more difficult with a capsule in plastic because, when the user initiates the mechanical movement of the capsule engagement members, the piercing of the back side of the plastic capsule requires a stronger force and is perceived as a difficult movement. Finally the ergonomic feeling is not pleasant.

An object of the present invention is to provide plastic capsules for the above machines that can be correctly ejected.

It would be advantageous to provide plastic capsules for the above machines that do not deform under the hot water extraction.

### Summary of the invention

In a first aspect of the invention, there is provided a capsule containing beverage ingredient, such as tea leaves, configured for preparing a beverage, such as tea, by injection of hot water therein and comprising :
- a housing for storing said beverage ingredient, said housing comprising :
   - a container part,
   - a front opened side,
   - a rim extending from the front opened side, and
- a front cover and/or a wall closing the front opened side of the housing, and
- the housing presenting a cross section varying from the back side to the front side from a circular section to a globally triangular section - with smooth rounded corners - respectively, and
wherein :
- the housing is made of plastic material, and
- the container part comprises a stacking border rising from the rim and from the external surface of the container part, said stacking border forming a line surrounding the front opened side and said line of the stacking border being discontinued.

The capsule is configured for preparing a beverage, preferably tea, by injection of hot water therein. Water is injected through the water injection area so as to fill the housing and brew beverage ingredient within the capsule. The resulting beverage is dispensed through the front side, preferably through an opening pierced in the front wall and/or cover, during the process of preparation.

The housing of the capsule is a container presenting a cross section shape varying between a circular and a triangular profile with smooth rounded corners. Preferably the triangular profile is isosceles and the two equal sides are longer than the third side.

Generally the water injection area is a plane surface.

Capsules presenting such a shape are commercialised under the trademark Special-T by Nestle. The housing of these commercialised capsules is made of aluminium.

The capsule contains at least one beverage ingredient. The beverage ingredients can be for example selected in the following list: tea leaves, herbal or fruit tea leaves, roast and ground coffee, soluble beverage ingredients, ... It is preferably tea or herbal or fruit tea leaves.

In the present capsule, the housing is made of plastic material. In particular, this plastic material is able to be shaped by thermoforming or injection moulding. It is usually a thermoplastic or thermosetting polymer. It is food agreed due to its use for preparing a beverage, like polypropylene (PP) based plastic material.

If the housing is made by thermoforming, which is the preferred embodiment, this material can be selected in the list of PP (polypropylene) based layers material, in particular PP-EVOH-PP layered materials (EVOH meaning ethylene vinyl alcohol). The different layers can comprise regrind plastic material layers, binding material layers and/or colouring material layers too.

For stacking and manufacturing reasons, the container part comprises a stacking border rising from the rim and from the external surface of the container. The stacking border forms a line that extends all around the outline of the capsule close to the rim. Accordingly this line surrounds the front opened side of the housing.

In the present invention the line formed by the stacking border is discontinued. Consequently at least one part of the stacking border does not bulge out from the external surface of the housing.

It has been observed that at least one discontinuity in the stacking border is sufficient to avoid problems of incorrect ejection of the capsule. During capsule ejection, it is supposed that said at least one discontinuity facilitates breaking of vacuum between the internal surface of the first capsule engagement member and the external surface of the housing of the capsule as explained hereunder.

Since the stacking border is simply discontinued, the stacking border still exists and the main function of the border that is enabling stacking and separation of stacked housings by a manufacturing tool is preserved : actually some discontinuities along the line do not change the way capsules are stacked.

Generally the at least one discontinuity can be an indentation extending along the line formed by the stacking border. Generally, this indentation simply erases the stacking border from the surface of the housing and does not form a groove extending inside the internal volume of the housing.

The stacking border can be discontinued along at least one portion. Preferably the stacking border is discontinued along several portions.

Preferably, the at least one portion extends along at least 3 mm. Such a size for the discontinued portion is sufficient to solve the problem of ejection of the capsule and does not create problem of manufacturing, in particular by thermoforming.

Preferably, the at least one portion extends along at most 10 mm.

Even more preferably the at least one portion extends along about 5 mm.

Preferably, the stacking border is discontinued along several portions, the portions being symmetrically disposed around the capsule housing. Symmetric positions of the discontinuities is supposed to keep the capsule well oriented during its movement from the first capsule engagement member to the capsule collecting bin and to avoid that the capsule tilts wrongly and remains blocked in between.

Preferably the stacking border is discontinued along the same side of the globally triangular cross section of the housing. Preferably this side corresponds to the side of the capsule placed upwards during the beverage preparation s explained hereunder.

When the stacking border is discontinued along several portions, these portions can present the same length or not. Preferably they present the same length.

Preferably,
- the housing presents :
   - a largest height comprised between 47,9 and 48,5 mm, and preferably of about 48,18 mm, and
   - a largest width comprised between 36,7 and 37,3 mm, and preferably of about 37 mm, and
   - a largest depth comprised between 24,1 and 24,3 mmm and preferably of about 24,43 mm,
      and
- the stacking border raises from the external surface of the container by at least 0,029 mm and from the rim by at least 3,1 mm.

With the above dimensions, in the preferred embodiment, the stacking border is discontinued along three portions, said portions extending along about 5 mm, and said portions being along the same side of the globally triangular cross section of the housing.

Specifically, the discontinuity of the stacking border, and preferably the above preferred embodiment, are sufficient to avoid any problem of ejection for plastic capsules within a machine of the type commercialised under the trademark Special-T by Nestle.

Usually the housing comprises :
- a back side comprising a water injection area, said water injection area comprising a hole in the housing,
- a back cover closing the hole of the water injection area.

The back side presents usually one single hole. This hole is configured for receiving a water injection needle when the capsule is used in a beverage preparation machine.

This hole is covered by a back cover. The back cover is preferably attached at the inside of the housing. Generally this back cover is pierceable by a needle. It is preferably made of aluminium. AlOx coated PET films can also be used.

Preferably a part of the water injection area around the hole is flat. Accordingly the back cover can be more efficiently attached to the housing to close the hole.

Generally the hole at the back side of the housing presents the shape of a circle. Usually the hole presents a diameter of at least 4 mm, preferably of at least 5 mm, even more preferably of at least 6 mm.

Accordingly, when the capsule is pierced by the needle of a beverage preparation machine, the piercing movement is soft for the operator and there is no risk that the needle slides in an inappropriate manner against the edge of the hole at the back side of the housing and its movement being hampered by the plastic wall of the capsule. It is the same when the needle is retracted from the capsule during the ejection step. Even if the capsule is not perfectly immobile at the times when the needle moves in and out of the hole, the dimension of the hole guarantees that the needle does not interact with the plastic wall of the capsule, impinging the soft movement of the capsule in the machine. Specifically this hole is sufficient to avoid any problem in the movement of the plastic capsule within a machine of the type commercialised under the trademark Special-T by Nestle.

Preferably the housing is shaped so as to comprise a hollow or a groove on its external surface.

This hollow surrounds the water injection area at the back face of the housing.

In one dimension, this hollow extends within the internal volume of the housing.

In another dimension, this hollow extends at least along an annular portion surrounding the hole of the water injection area.

According to the preferred mode, the hollow can present the shape of an annular portion or ring surrounding the hole of the water injection area.

According to an alternative mode, the hollow can present the shape of a circle comprising the hole of the water injection area.

According to a less preferred mode, the hollow can present any shape (oval, square, ...) as long as said hollow extends at least along an annular portion surrounding the hole of the water injection area.

Generally, at least along the annular portion surrounding the hole of the water injection area, the depth of the hollow is of at least 0,7 mm, preferably of about 0,9 mm.

Preferably, with the above preferred dimensions of the capsule housing, the annular portion surrounding the hole of the water injection area and along which the hollow extends presents an internal diameter of 10 mm and an external diameter of 14 mm.

This hollow extending at least along the annular portion surrounding the hole of the water injection area is sufficient to avoid any deformation of the shape of the housing made in plastic further to the introduction of hot water (generally of at least 70 °C) in the housing by means of a machine of the type commercialised under the trademark Special-T by Nestle.

As mentioned above, in the preferred mode, the hollow presents the shape of an annular portion or ring surrounding the hole of the water injection area.

As the groove usually extends from the external surface of the housing inside the internal volume of the housing, the volume of the groove slightly impedes the internal volume of the housing compared to a groove in form of a circle (in an alternative mode). Indeed keeping the internal volume of the housing as large as possible is critical for maintaining an optimal brewing of tea leaves inside the capsule. Yet, with the above preferred dimensions of the housing, providing a circle of at least 14 mm diameter at the back side of the housing impacts the internal volume of the capsule by a decrease of 6 % compared to the existing capsules made of aluminium. Accordingly a hollow in shape of an annular portion or ring is preferred in order to keep the internal volume as large as possible.

Preferably the housing of the capsule is made by a process of thermoforming starting from a plastic sheet comprises the steps of :
- heating the plastic sheet to a pliable forming temperature,
- forming at least one housing to the desired shape in the plastic sheet, and
- trimming the housing(s).

The hole at the back side is usually formed by punching the back side of the housing in a further step. Punching the back side of the capsule with precision is not always possible and, although it is desired to position the hole very accurately at the centre of the back side of the housing, it frequently happens that the hole is not centred. Actually the tolerance for the position of the hole resulting from the punching is of about +/- 0,2 mm. The consequence of this bad centring of the hole at the back side of the capsule is that the risk the back hole is not well positioned relatively to the water needle in the beverage production module during beverage production and impinges the movement of the water needle is increased. Yet the plastic capsule such as defined above limits this risk. In particular the dimension of the back hole guarantees that a capsule produced with the worst tolerance remains well handled in the beverage production module.

In an alternative way, the housing can be produced by injection moulding. In that case the hole in the back can be produced during moulding and the bad centring of the hole is not an issue.

In the following step of manufacture, the back side cover is attached to the back side of the housing in order to close the back side hole. Preferably this cover is attached to the internal surface of the housing surrounding the hole. Attachment can be made with glue, by ultrasound welding or by thermosealing. In order to get a good attachment it is preferred that the edge of the cover is strongly attached to the housing around the hole. For this reason, the dimension of the hole shall be set so that the cover can be attached on a sufficiently large area and a rather flat area. Generally an area presenting a width of at least 2 mm is preferred. Accordingly, preferably, the diameter of the hole at the back side of the housing is of at most 12 mm, preferably at most 11 mm, even more preferably at most 10 mm.

In the following step of manufacture, the housing can be filled with beverage ingredient before closing the front side with a cover and/or a wall as described hereunder.

The capsule can comprise a wall at the font opened side of the housing. This wall can provide a function of guiding the beverage out of the capsule and/or a function of facilitating opening of a beverage outlet from the capsule and/or an identification function. Whatever the function, the wall always comprises an opening providing an outlet path for beverage prepared in the capsule. The opening can be through the wall or can result from the use of a partially truncated wall.

The capsule can comprise a wall at the front side of the housing, said wall comprising at least one beverage overflow hole.

Preferably a filter is attached to said wall so that the filter covers the at least at least one beverage overflow hole.

Preferably the filter is attached to the side of the wall facing the internal enclosure of the housing.

In a particular embodiment, such a wall can be designed according to the teaching of WO 2007/042414.

Accordingly, when the capsule comprises tea leaves, a tea beverage of optimised quality and deprived of tea leaves fines is produced.

The capsule can comprise a wall at the front side of the housing, said wall comprising an identification member on its outside face, said identification member being designed for being physically contacted.

Such a wall comprising an identification member can be designed according to the teaching of EP-A-1 950 150.

Accordingly, information about the optimal preparation of the beverage from the beverage ingredient can be coded through the identification member.

Preferably the capsule comprises a wall at the front side of the housing, said wall comprising at least one beverage overflow hole and an identification member on its outside face. Preferably a filter is attached to said wall so that the filter covers the at least at least one beverage overflow hole.

The capsule can comprise a front cover, said front cover closing the front side of the housing. Usually the front cover is a plane cover. At least a part of the front cover is preferably pierceable or tearable.

Preferably the front cover is made of:
- a monolayer membrane like aluminium, or
- a multilayer membrane like laminates of PET/aluminium/PP (PET = polyethylene terephthalate), PE/EVOH/PP, PET/metallised/PP, aluminium/PP, laminates of paper.

The front cover guarantees the freshness and the hygiene of beverage ingredient stored in the capsule. The front cover is usually food agreed.

According to the preferred embodiment, the capsule comprises a wall at the front side of the housing and a cover closing the front side of the housing above the wall.

In said embodiment, preferably the wall comprises a shearing member on its outside face, said shearing member being designed to tear the cover when the capsule is clamped in the beverage preparation machine.

Accordingly a beverage outlet can be made in the cover when the capsule is clamped in the machine.

The capsule of the present invention presents a rim extending from the edge of the front side. Preferably the rim presents a flat surface. Preferably a cover is fixed on this rim.

Preferably the capsule comprises an identification member such as described above under the cover.

Preferably the capsule comprises a filter under the cover.

Preferably the capsule comprises an overflow wall under the cover.

Preferably the capsule is configured for preparing and dispensing a beverage with the front side positioned vertically within a beverage preparation machine.

According to a **second aspect,** there is provided a beverage production system comprising a capsule such as described above and a module for producing a beverage from the capsule,
- the module comprising :
   - a first capsule engagement member, which can be displaced relative to a second, co-operating capsule engagement member between a capsule discharge position and a beverage production position,
   - means for actively retracting the first capsule engagement member from the beverage production position to the capsule discharge position in which the capsule is discharged from the first capsule engagement member,
the displaceable first capsule engagement member comprising :
- a capsule receptacle, said capsule receptacle shape matching at least a part of the outer shape of the housing of the capsule, and
- a water needle for entering the capsule through the hole at the back side of the capsule housing and injecting water in the capsule, and
- an annular seal at the internal peripheral edge of the capsule receptacle.

The module for producing a beverage of the system can present the features of the module described in EP-A1-2 033 551. It comprises two co-operating capsule engagement members, the first member being displaceable between a closed position in which the capsule is engaged between the two members and called the beverage production position and an open position in which no capsule is engaged by the members and called the capsule discharge position.

When the first member is in the beverage production position, a beverage can be extracted from the capsule and dispensed in a drinking container.

The capsule discharge position is distinct from the beverage production position. Accordingly the capsule discharge position is offset relative to the beverage production position that is to the vertical of the beverage flow path.

The displaceable first capsule engagement member comprises a capsule receptacle. The internal surface of the receptacle matches at least a part of the outer shape of the housing of the capsule meaning that the capsule receptacle presents a cross section varying from the back side to the front side from a circular section to an essentially triangular section - with smooth rounded corners - respectively, as for the capsule.

This receptacle presents a sidewall and a mouth that delimit with the second capsule engagement member at least part of a brewing chamber for containing the capsule.

An annular seal is present at the internal peripheral edge of the capsule receptacle. When a capsule is engaged in the first capsule engagement member, this seal leans on the external surface of the capsule close to the rim and avoids leaking of water. Actually, during beverage preparation, water might flow from the hole at the back side of the capsule. The seal is usually made of a flexible and resilient material. It can be made of an elastomeric material like a silicone or an EPDM polymer (EPDM = ethylene propylene diene monomer).

Due to the use of plastic material for the capsule the tightness between this seal and the housing of the capsule close to the stacking border is increased. In particular, it is supposed that a vacuum effect appears between the capsule housing and the first capsule engagement member. During the beverage preparation, the discontinuities at the stacking border do not decrease the tightness between this seal and the housing of the capsule close to the stacking border. Actually the seal is sufficiently flexible to cover the at least one discontinuity. Yet, during capsule ejection, when a force is exerted on the capsule or the first capsule engagement member to separate one from the other, the at least one discontinuity facilitates this operation by breaking locally the tightness and then the vacuum. As a result, the ejection is facilitated and the capsule does not become blocked inside the machine.

The module comprises means for displacing the first capsule engagement member between the two positions. It is preferably a handle. For example a handle such as described in WO 2015/032651 or WO 2007/134960.

The module is designed for injecting water into the capsule and having beverage drained from the capsule while the capsule is in the beverage production position.

Preferably the second engagement member is a front wall against which the first capsule engagement member can push the capsule. Once pushed against the front wall, an outlet can be opened in the capsule so that beverage can flow from said outlet and flows along the front wall in a drinking container.

Accordingly the module, preferably the second capsule engagement member, can comprise an opening means for entering and generally piercing the capsule and producing a beverage outlet in the capsule. The opening means can be a puncher as described in WO 2010/146101. This opening means is generally placed adjacent to the second capsule engagement member or can even be part of this second capsule engagement member. According to another embodiment the capsule can present an opened beverage outlet before being introduced in the module.

In the preferred embodiment, the second engagement member is essentially positioned to the vertical of the beverage flow path.

The displaceable first capsule engagement member comprises a water needle for entering the hole of the water injection area, piercing the cover covering said hole and injecting water in the capsule. This needle protrudes from the internal surface of the first capsule engagement member. The needle presents a seal at its basis protruding from said surface. The seal aims to avoid water or beverage leaking from the hole pierced in the water injection area of the capsule upstream to the internal parts of the machine. This seal is generally made of a flexible and resilient material like an elastomer. It can be made of silicone rubber. This seal presents an annular ring. This annular ring is generally centred on the basis of the needle. This annular ring of the seal matches at least the shape of the annular portion of the hollow surrounding the hole of the water injection area in the capsule.

During the displacement of the first capsule engagement member to the beverage production position, the first capsule engagement member surrounds the capsule, the needle pierces the cover at the water injection area of the capsule and protrudes inside the capsule.

Simultaneously the annular seal at the basis of the needle cooperates with the hollow at the back side of the housing of the capsule : due to the hollow in the capsule, the annular seal of the needle enters in this hollow.

In this position, hot water can be introduced through the needle in the plastic capsule to brew the beverage ingredient. Once the capsule is further extracted from the machine, the plastic capsule presents the same shape as when it was introduced in the machine before beverage preparation, although hot water has been injected inside.

According to one particular embodiment of the above system :
- the module is configured so that in the beverage production position, the front side of the capsule is oriented vertically, and
- the capsule presents a rim size such that at least a part of the rim of the capsule extends beyond at least a part of the first capsule engagement member once it is engaged in the first capsule engagement member, and
- the module comprises at least two means for retaining the rim of the capsule extending beyond the first capsule engagement member when said first capsule engagement member is displaced from the beverage production position to its capsule discharge position, said at least two retaining means engaging two parts of the rim of the capsule positioned in the upper part of the capsule,
- the capsule is designed so that the stacking border of the capsule is discontinued on the upper part of the capsule once positioned in the beverage production position.

Usually one retaining means is positioned on each lateral side of the longitudinal axis of displacement of the first capsule engagement member. These retaining means are positioned in the lateral walls of the module so as to engage the upper part of the rim of the capsule. By upper part of the rim of the capsule, it is meant the rim positioned above the middle of the capsule. As a result, these retaining means initiate the disengagement of the upper part of the capsule before the lower part of the capsule. Accordingly, the position of the at least one discontinuity of the stacking border at the upper part of the capsule improves the effect of the retaining means on the capsule. The separation of the plastic capsule and the first engagement member is improved by exerting a force close to the at least one discontinuity of the stacking border of the capsule aiming at breaking the tightness and the vacuum created between the seal and the capsule housing.

According to a **third aspect,** there is provided a housing of a capsule such as described above.

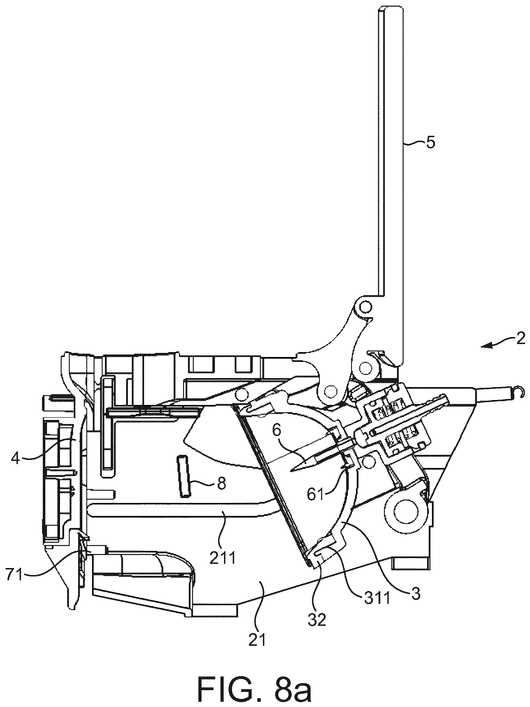

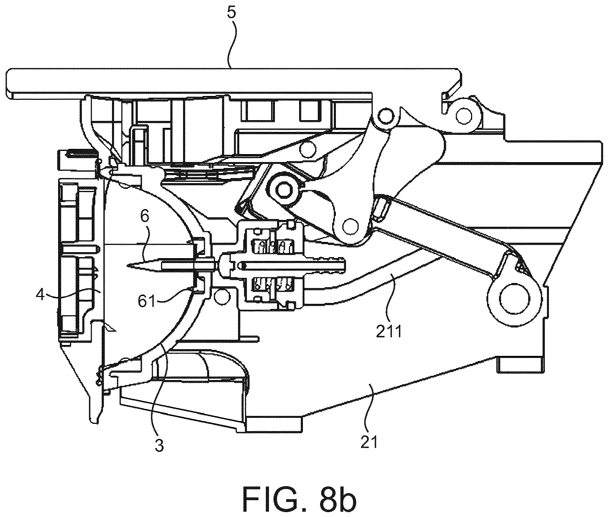

In the present application the terms "internal", "external", "back", "front", "bottom", "upper" and "lateral" are used to describe the relational positioning of features of the invention. These terms should be understood to refer to the capsule in its normal orientation when positioned in the module for producing a beverage or to the module in its normal orientation when used for producing a beverage as shown in the figures 8a and 8b.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1a is a perspective view of the back side of a capsule according to the invention,
- Figure 1b is a perspective view of the lateral side of the capsule of Figure 1a,
- Figure 1c is a perspective view of the front side of the capsule of Figure 1a,
- Figure 2 is a side view of the capsule of Figure 1a,
- Figure 3a is the cross section view of the capsule of Figure 3 according to A-A,
- Figure 3b is the cross section view of the capsule of Figure 3 according to B-B,
- Figure 3c is the cross section view of the capsule of Figure 3 according to C-C,
- Figure 3d is the cross section view of the capsule of Figure 3 according to D-D,
- Figure 3e is the cross section view of the capsule of Figure 3 according to E-E,
- Figure 4 is a top view of the of the capsule of Figure 1a,
- Figure 5 is a magnified view of the back side of the housing of the capsule of Figure 1a,
- Figure 5a is a cross-sectional view of the capsule as taken along plane P of Figure 5,
- Figure 5b-5d illustrate a variant of the hollow at the back side of the capsule,
- Figure 6 is a perspective view of a capsule comprising a wall,
- Figure 7 is a perspective view of a capsule comprising a filter,
- Figure 8a is a vertical cross-sectional view of a module for producing a beverage from a capsule in the system of the present invention in its capsule discharge position,
- Figure 8b is a vertical cross-sectional view of the module for producing a beverage with the capsule in its beverage production position,
- Figure 9 is an isolated perspective view of a first capsule engagement member of the module of Figures 8a and 8b,
- Figure 10 is an isolated view of the needle of the first capsule engagement member of Figure 9,
- Figure 11 schematically illustrates a beverage preparation machine comprising the module of the beverage production system of the invention.

### Detailed description of the drawings

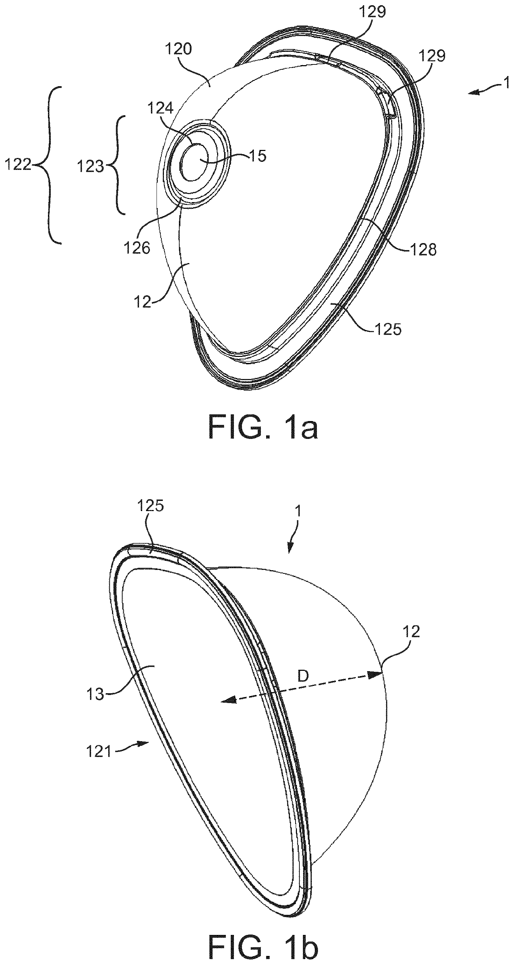

**Figure 1a** is a view of a capsule 1 according to the invention. The capsule comprises a housing 12. This housing is made of plastic material, preferably a plastic material that can be thermoformed, even more preferably a plastic made from polypropylene polymer. Figure 1a shows the back side 122 of said housing. In the present invention, back side refers to the side where water is introduced in the capsule, whereas the front side refers to the side the beverage is dispensed from.

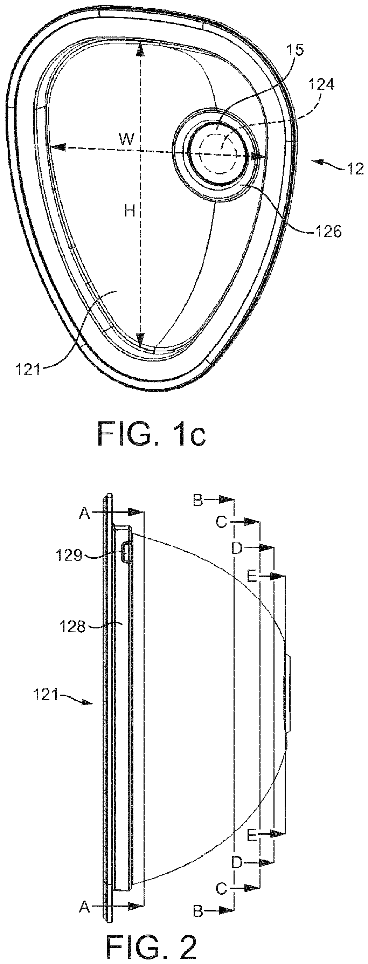

The housing 12 comprises a container part 120 defining an internal volume for storing beverage ingredients. At the front side 121 (illustrated in Figure 1c) the housing comprises a front opened side 121 through which beverage ingredient is introduced during manufacturing. The housing comprises also a rim 125 extending from the front opened side. This rim enables the attachment of a front cover as explained hereunder.

As illustrated in Figure 1a, at the back side 122, the housing presents a water injection area 123. Preferably this area comprises a hole 124 in the housing. This hole is configured for cooperating with and enabling the passage of the water injection needle of a module for producing beverage form the capsule and illustrated hereunder in Figure 8b. Preferably this hole is closed by a cover 15. This cover is made of a material pierceable by the water injection needle. It is usually an aluminium membrane.

**Figure 1b** shows the front side 121 of the housing. At said front side, the housing is closed by a front cover 13. The cover 13 is attached to the rim 125 extending from the front opened side of the housing. Preferably at least a part of the cover is pierceable or tearable so that a beverage outlet can be created during beverage preparation. The cover guarantees the freshness and the hygiene of beverage ingredient stored in the capsule. The front cover 13 is preferably flexible and pierceable.

**Figure 1c** shows the housing before the beverage ingredient is introduced inside and before its front opened side 121 is closed by the front cover 13. At the back side, the back cover 13 is attached to the internal surface of the housing and hides and closes the hole 124 (illustrated in dotted lines).

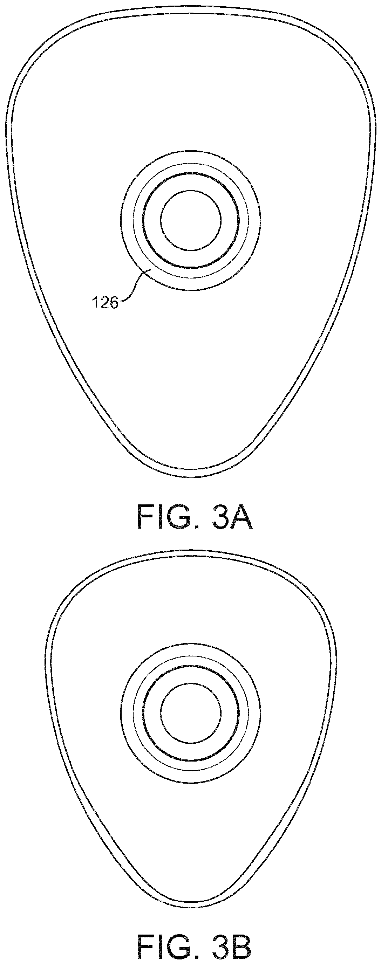

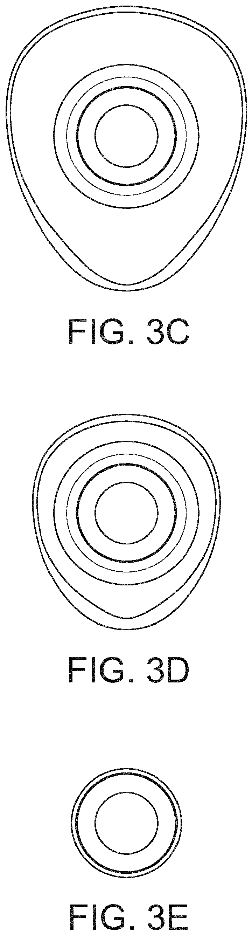

**Figures 3a to 3e** show the cross sections of the housing 12 according to different planes A-A, B-B, C-C, D-D and E-E respectively, from the front to the back of the housing, as illustrated in the side view of the capsule in **Figure 2****.** These figures show how the cross section gradually changes from a globally triangular cross section with smooth rounded corners (Figure 3a) to a circular section (Figure 3e). Whatever the cross section, the housing 12 preferably always present smooth rounded corners and lines. In Figure 3a, it is apparent that the triangular profile is isosceles and the length of either one of both equal sides is greater than the length of the third side (the upper one on Figure 3a).

As illustrated in **Figure 1a****,** the housing comprises a stacking border 128 raising from the external surface of the container and from the rim 125. This stacking border forms a line that surrounds the opened side. This stacking border 128 is common in containers made of plastic material and helps destacking the containers by providing a small space between two stacked containers. Generally, the stacking border raises from the external surface of the container by at least 0,029 mm. Generally, the stacking border raises from the rim by at least 3,1 mm.

In the present invention, this stacking border 128 is discontinued. In the particular illustrated embodiment the stacking border is discontinued along several portions 129.

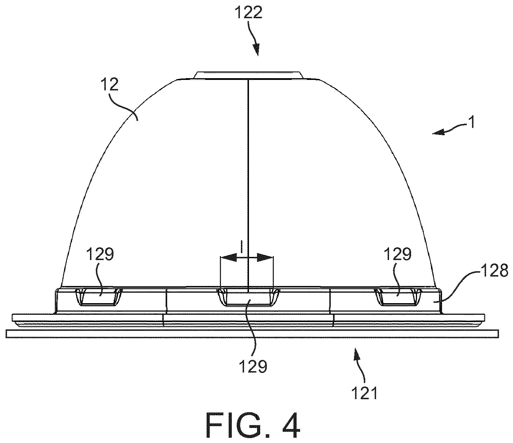

**Figure 4** is a top view of the capsule of Figure 1a and shows the presence of three portions 129 wherein the stacking border 128 is discontinued. These portions 129 are indentations in the stacking border 128. Along these portions of discontinuity, the external surface of the container does not bulge out. These indentations extend along the line formed by the stacking border. These indentations do not form grooves extending inside the internal volume of the housing.

In the illustrated capsule, the three portions 129 present the same length I. Yet, portions of different lengths can also be implemented.

In the illustrated embodiment, the three portions 129 present a length of 6 mm.

In non illustrated embodiments, the stacking border 128 can be designed with less or more than three portions 129.

Preferably, the stacking border 128 is discontinued along the same side of the globally triangular cross section of the housing. Preferably this side corresponds to the upper side of the capsule, the upper side being defined according to the position of the capsule in the module for producing a beverage from the capsule as explained hereunder. In Figure 4, the three portions 129 are designed at the same side of the triangle illustrated in Figure 3a, that is the upper side.

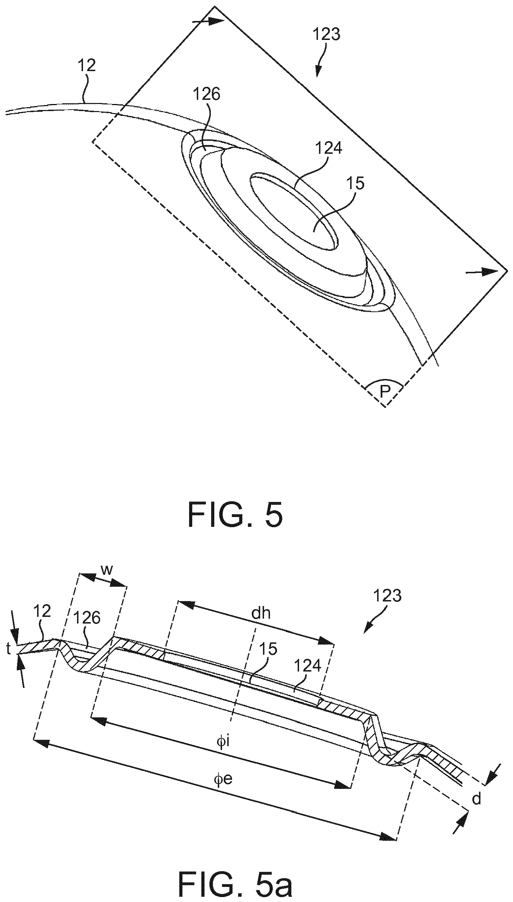

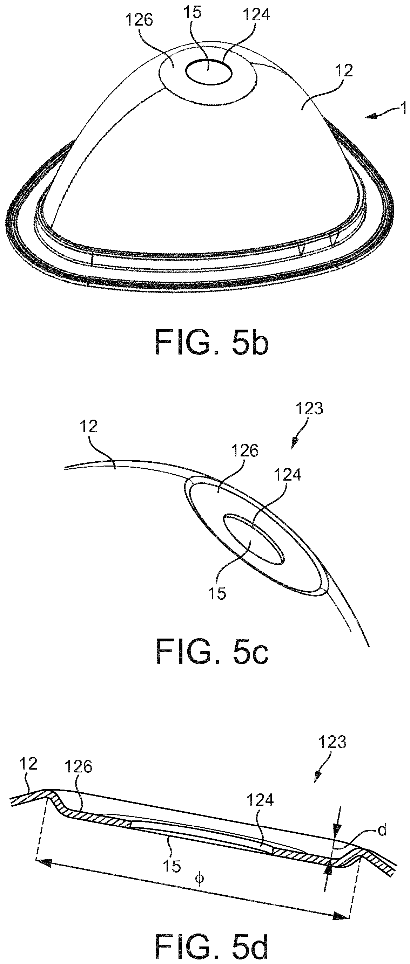

In the illustrated embodiment of **Figures 1a****,** **5 and 5a****,** a hollow 126 surrounds the water injection area 123. In one dimension this hollow extends inside the internal volume of the housing like a recess as clearly apparent in the cross section of Figure 5a. In this embodiment this hollow presents the shape of a ring surrounding the water injection area 123, like a groove. In the illustrated embodiment of Figures 1a, 5 and 5a, this ring surrounds the hole 124.

In another dimension, the hollow 126 extends at least along the annular portion surrounding the hole 124 of the water injection area as apparent in Figures 1a and 5.

The hollow 126 can be larger than this annular portion. In one particular embodiment, the hollow 126 can present the shape of circle as illustrated in **Figures 5b to 5d****.** This circle encompasses the annular portion surrounding the hole 124 of the water injection area. When the capsule 1 is made of plastic and when hot water is injected in the housing, this hollow 126 guarantees that the shape of the capsule is not deformed.

A hollow 126 presenting the shape of an annular ring is preferred for the reason that it does not decrease the internal volume of the housing as much as a hollow 126 presenting the shape of a circle. Actually due to the thickness t (see Figure 5a) of the plastic wall the housing is made of, the internal volume of the capsule is smaller than current housing made of an aluminium sheet. Indeed whereas an aluminium sheet presents a thickness of about 0,1 mm, the thickness of a thermoformed plastic capsule, preferably made of polypropylene polymer, is of about 0,65 mm. Changing the nature of the capsule material from aluminium to plastic has a direct impact on the internal volume of the capsule due to the difference of thickness of these materials. Consequently, keeping the same external shape, the internal volume of the plastic capsule decreases by 6 % compared to the internal volume of the aluminium capsule. Such a difference can directly impact the quality of the beverage preparation when the beverage is tea prepared from tea leaves. Indeed infusing tea leaves in the small volume of a capsule can be difficult due to the swelling of tea leaves in hot water and there is less space for having tea leaves opening in hot water. Any decrease of the capsule volume can become critical. Consequently the design of the groove can be determined in order to take that aspect into account. In particular an annular ring is sufficient to keep the volume necessary for tea leaves brewing while avoiding the shape deformation due to hot water. With such a design the decrease of the internal volume from a capsule made of an aluminium sheet to a capsule made of thermos-formed plastic was decreased by 4,5 % only.

As an example, for the illustrated capsules usually comprise a housing presenting :
- a largest height H comprised between 47,9 and 48,5 mm, and
- a largest width W comprised between 36,7 and 37,3 mm, and
- a largest depth D comprised between 24,1 and 24,3 mm.

The hollow 126 preferably extends along at least an annular portion surrounding the hole 15 of the water injection area, said annular portion presenting an internal diameter Øi of 10 mm and an external diameter Øe of 14 mm. By diameters, it is meant the dimensions at the internal and external edges of the annular portion, as illustrated in Figures 5a.

The hollow 126 can present a shape limited to the annular portion presenting above internal and external diameter, or can present a ring shape larger than this annular portion or can present the shape of a circle, the ring and the circle comprising the annular portion.

In Figure 5d, the hollow 126 is a circle encompassing the annular portion meaning this circle present a diameter presents a diameter Ø of at least 14 mm.

Preferably the depth d of the hollow 126 is of at least 0,7 mm, and even more preferably is of about 0,9 mm, either in Figure 5a or 5d.

These dimensions H, W, D are illustrated in Figures 1b and 1c and these dimensions Øi, Øe, Ø, w, t and d are illustrated in Figures 5a and 5d.

As illustrated in **Figures 1a****,** **5 and 5a****,** the housing 12 comprises a water injection area 123 comprising a hole 124 in the housing. Preferably the hole 15 of the water injection area is circular and presents a diameter dₕ of at least 4 mm, preferably of at least 5 mm, and even more preferably of at least 6 mm.

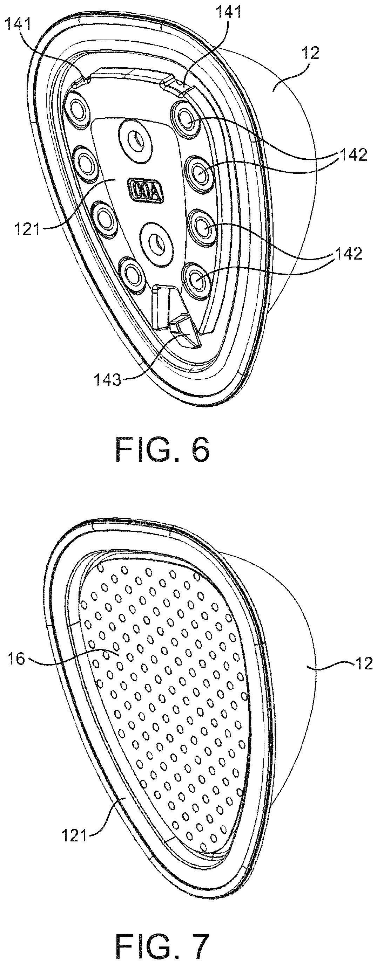

**Figure 6** illustrates a capsule comprising a front wall 14 at the front side of the housing.

The front wall 14 comprises two beverage overflow holes 141. These overflow holes 141 prevent the beverage from leaving the capsule too rapidly and before tea leaves have been sufficiently brewed.

In a preferred mode, the front wall 14 can comprises identification member 142, here holes or absence of holes, designed for being physically contacted by an identification unit of the beverage preparation module. Such a front wall 14 comprising an identification member can be designed according to the teaching of EP-A-1 950 150. Accordingly, information about the optimal preparation of the beverage from the beverage ingredient can be coded through the identification member.

The front wall 14 is usually positioned just under the front cover 13 of the capsule.

In a preferred mode, the front wall 14 can comprise a shearing member 143 on its front face, said shearing member being designed to tear the front cover 13 when the capsule is clamped in the beverage preparation machine further to the interaction of the shearing member with an opening member of the beverage preparation module. Accordingly a beverage outlet can be made in the front cover 13 when the capsule is clamped in the machine. Such a shearing member is described in WO 2010/146101.

**Figure 7** illustrates a capsule comprising a filter 16 at the front side 121 of the housing. The filter prevents tea leaves from leaving the capsule. In a preferred embodiment the filter is attached to the back side of the wall 14 comprising overflow holes 141 so that the filter covers these holes.

In a particular embodiment, such a wall can be designed according to the teaching of WO 2007/042414.

Accordingly, when the capsule comprises tea leaves, a tea beverage of optimised quality and deprived of tea leaves fines is produced.

**Figures 8a** **and** **8b** illustrate a module 2 for producing a beverage from a capsule according to the invention. The module 2 enables the introduction and the positioning of the capsule for the preparation of a beverage and the ejection of the capsule.

In Figure 8a the module is illustrated in its opened position, that is to say a position where no capsule has been introduced yet. The module 2 is ready for receiving a capsule. The module 2 comprises a frame 21. The module comprises a first capsule engagement member 3 and a second capsule engagement member 4. The second member 4 is fixed whereas the first member 3 is mobile and displaceable between a capsule discharge position (as illustrated in Figure 8a) and a beverage production position (as illustrated in Figure 8b).

The module comprises an actuator 5 that an operator actuates manually to initiate a beverage preparation once a capsule has been introduced in the module through an opening 7. Once an operator has introduced a capsule in the module 2 through the opening 7, the capsule is retained in front of the second capsule engagement member 4 by support means 71 on which the edge of the capsule leans.

The actuator 5 induces the movement of the first capsule engagement member 3 to the second capsule engagement member 4 by pushing down the actuator 5 with the effect of enclosing the capsule retained by the support means 71 between the two capsule engagement members 3, 4 as illustrated in Figure 8b.

The displaceable first capsule engagement member 3 comprises a capsule receptacle 31, said capsule receptacle shape matching at least a part of the outer shape of the housing of the capsule when it is displaced to the beverage production position (Figure 8b).

The displaceable first capsule engagement member 3 comprises a water needle 6 for piercing the back cover of the capsule, entering the capsule and injecting water in the capsule. The needle is in fluid connection with a hot water supply (not illustrated).

The module comprises means for retaining the rim of the capsule extending beyond the capsule receptacle 31 when the first capsule engagement member 3 is displaced from the beverage production position (Figure 8b) to its capsule discharge position (Figure 8a). These means consist in two tabs 8 symmetrically positioned on the lateral walls of the frame 2 of the module and able to retain the rim 125 of the capsule.

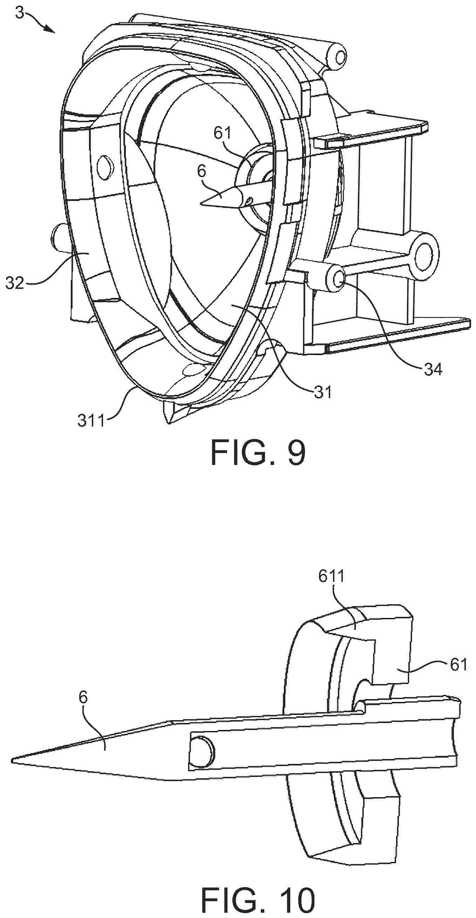

The displaceable first capsule engagement member 3 comprises an annular seal 311 at the internal peripheral edge of the capsule receptacle 311, as explained in relation with the under Figure 9. Accordingly, when the capsule is in the beverage production position (Figure 8b), the seal provides a tight contact with the external surface of the housing of the capsule, in particular in the area of the stacking border of the capsule.

It is one interpretation that the combination of this tight contact with the use of plastic capsule creates the problem of ejection of these plastic capsules.

Indeed the contact is extremely tight. When a plastic capsule is used in this type of module, the introduction of hot water in the capsule housing probably leads to dilatation of the housing within the first capsule cage member. Air trapped in the space between the housing and the first capsule cage member is chased out and a suction effect happens. The capsule becomes stuck to the capsule receptacle. The sucking effect is not so strong as to prevent the ejection of the capsule from the capsule receptacle but this requires a stronger force on the actuator 5. While applying this stronger force, it can happen that the capsule is thrown out of the capsule receptacle horizontally in direction of the front of the module and remains blocked in the machine in place of simply dragging down in the capsule collecting bin, preventing the introduction of any new capsule within the module.

A plastic capsule presenting a discontinued stacking border does not present such a risk because the discontinuity facilitates the detachment of the capsule housing from the annular seal. Accordingly, although generation of vacuum, the tightness between the seal and the capsule can be more easily broken when the tabs 8 of the frame of the module contact and retain the rim 125 of the capsule. Accordingly the capsule can be more gently ejected from the capsule receptacle and can fall in the bin.

It has been noticed that it is preferable to position the discontinuities in the stacked border at positions above the points of contact of the rim of the capsule with the retaining means 8 of the module. An explanation is that the centre of inertia of the capsule after beverage extraction is placed in a rather low and backward position (low and backward in relationship with Figures 8a and 8b) due to the shape of the capsule, then it is preferable to unseal the upper part of the capsule first in order to keep the capsule rather vertically aligned during the ejection movement. If the capsule becomes tilted, it would tend to block in the opening to the bin.

**Figure 9** illustrates the displaceable first capsule engagement member 3. This member comprises a capsule receptacle 31. The water needle 6 for piercing the capsule and injecting water inside points out from the back side of the capsule receptacle. The displaceable first capsule engagement member 3 comprises a seal 61 at the basis of the water needle 6.

At its opened mouth, the capsule receptacle 31 comprises an annular seal 32 extending at least along the internal peripheral edge of the capsule receptacle 311. This seal 32 avoids that water leaking from the hole produced by the needle in the back cover of the capsule and flowing around the capsule housing, leaks through the opened mouth of the capsule receptacle.

A part of this seal 32 creates also a friction with the external surface of the capsule. Accordingly, at the end of the beverage preparation and when the first capsule engagement member is moved back to eject the capsule, the capsule is retained in the capsule receptacle and moves back within until its rim is retained by retaining means 8.

**Figure 10** is an extracted and magnified view of the seal 61 and the needle 6 of Figure 9. The seal comprises an annular part 611. The seal is usually made of an elastomeric or rubber material presenting resilient and flexible properties. This seal at the basis of the needle guarantees that no liquid leaks from the back side of the capsule to the parts of the beverage preparation machine upstream the needle.

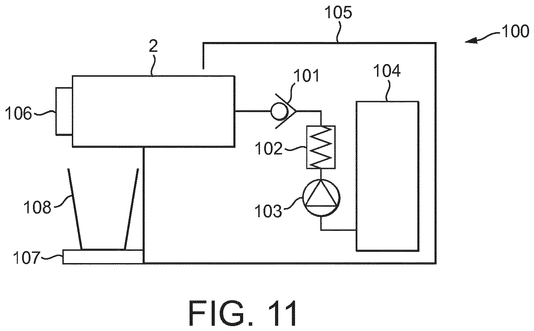

**Figure 11** illustrates a beverage preparation machine 100 comprising the beverage production system of the invention. The machine comprises a module 2, such as illustrated in Figures 8a and 8b. The hollow needle of the module is connected to a fluid supply comprising successively a check valve 101, a heater 102, a pump 103 and a fluid supply, usually a water tank 104. Other well-known elements for supplying fluid can be alternatively used. The different elements of the machine can be surrounded by a housing 105. The machine can comprise a drip tray 108 for supporting and positioning a cup 109 under the module 2. A user interface 106 can be provided to control the beverage preparation.

### List of references in the drawings :

| | |
|---|---|
| capsule | 1 |
| beverage ingredient | 11 |
| housing | 12 |
| front side | 121 |
| back side | 122 |
| water injection area | 123 |
| hole | 124 |
| rim | 125 |
| hollow | 126 |
| stacking border | 128 |
| discontinued portion | 129 |
| front cover | 13 |
| front wall | 14 |
| overflow | 141 |
| identification member | 142 |
| shearing member | 143 |
| back cover | 15 |
| filter | 16 |
| module | 2 |
| frame | 21 |
| guiding curve | 211 |
| first capsule engagement member | 3 |
| capsule receptacle | 31 |
| edge at front face of capsule receptacle | 311 |
| annular seal | 32 |
| guiding pin | 34 |
| second capsule engagement member | 4 |
| actuator | 5 |
| water needle | 6 |
| needle seal | 61 |
| annular part | 611 |
| opening | 7 |
| support means | 71 |
| retaining means | 8 |
| beverage machine | 100 |
| check valve | 101 |
| heater | 102 |
| pump | 103 |
| tank | 104 |
| housing | 105 |
| user interface | 106 |
| drip tray | 107 |
| cup | 108 |

## Claims

1. Capsule (1) containing beverage ingredient (11), such as tea leaves, configured for preparing a beverage, such as tea, by injection of hot water therein and comprising :
- a housing (12) for storing said beverage ingredient, said housing comprising :
- a container part (120)
- a front opened side (121),
- a rim (125) extending from the front opened side, and
- a front cover (13) and/or a wall (14) closing the front opened side of the housing, and
- the housing (12) presenting a cross section varying from the back side to the front side from a circular section to a globally triangular section - with smooth rounded corners - respectively, and
**characterised in that**:
- the housing (12) is made of plastic material, and
- the container part (120) comprises a stacking border (128) rising from the rim and from the external surface of the container part, said stacking border forming a line surrounding the front opened side and said line of the stacking border being discontinued.

2. Capsule according to Claim 1, wherein the plastic material is a thermoforming polymer.

3. Capsule according to Claim 1 or 2, wherein the plastic material is a polypropylene (PP) based plastic material.

4. Capsule according to any one of the precedent claims, wherein the stacking border (128) is discontinued along at least one portion (129).

5. Capsule according to the precedent claim, wherein the at least one portion (129) extends along at least 3 mm.

6. Capsule according to Claim 4 or 5, wherein the at least one portion (129) extends along at most 10 mm.

7. Capsule according to any one of Claims 4 to 6, wherein the stacking border is discontinued along several portions, the portions being symmetrically disposed around the capsule housing.

8. Capsule according to any one of the precedent claims, wherein the stacking border is discontinued along the same side of the globally triangular cross section of the housing.

9. Capsule according to any one of the precedent claims, wherein :
- the housing (12) presents :
• a largest height H comprised between 47,9 and 48,5 mm, and
• a largest width W comprised between 36,7 and 37,3 mm, and
• a largest depth D comprised between 24,1 and 24,3 mm, and
- the stacking border raises from the external surface of the container by at least 0,029 mm and from the rim by at least 3,1 mm.

10. Capsule according to the precedent claim, wherein the stacking border (128) is discontinued along three portions, said portions extending along 5 mm, and said portions being along the same side of the globally triangular cross section of the housing.

11. Capsule according to any one of the precedent claims, wherein the housing comprises :
- a back side (122) comprising a water injection area (123), said water injection area comprising a hole (124) in the housing,
- a back cover (15) closing the hole (124) of the water injection area.

12. A beverage production system comprising a capsule according to any one of the precedent claims and a module (2) for producing a beverage from the capsule,
- the module (2) comprising :
• a first capsule engagement member (3), which can be displaced relative to a second, co-operating capsule engagement member (4) between a capsule discharge position and a beverage production position,
• means (5) for actively retracting the first capsule engagement member (3) from the beverage production position to the capsule discharge position in which the capsule (1) is discharged from the first capsule engagement member (3),
the displaceable first capsule engagement member (3) comprising :
- a capsule receptacle (31), said capsule receptacle shape matching at least a part of the outer shape of the housing (12) of the capsule, and
- a water needle (6) for entering the capsule through the hole (124) at the back side of the capsule housing and injecting water in the capsule, and
- an annular seal (32) at the internal peripheral edge of the capsule receptacle.

13. A beverage production system according to the precedent claim wherein the annular seal (32) at the internal peripheral edge (311) of the capsule receptacle is made of a resilient and flexible material.

14. A beverage production system according to Claim 12 or 13, wherein :
- the module (2) is configured so that in the beverage production position, the front side (121) of the capsule is oriented vertically, and
- the capsule (1) presents a rim size such that at least a part of the rim (125) of the capsule extends beyond at least a part of the first capsule engagement member (3) once it is engaged in the first capsule engagement member, and
- the module comprises at least two means (8) for retaining the rim of the capsule extending beyond the first capsule engagement member when said first capsule engagement member (3) is displaced from the beverage production position to its capsule discharge position, said at least two retaining means engaging two parts of the rim of the capsule positioned in the upper part of the capsule,
wherein the capsule (1) is designed so that the stacking border (128) of the capsule is discontinued on the upper part of the capsule once positioned in the beverage production position.

15. A housing (12) of a capsule for holding beverage ingredient, said housing comprising :
- a container part (120),
- a front opened side (121),
- a rim (125) extending from the front opened side, and
- the housing (12) presenting a cross section varying from the back side to the front side from a circular section to a globally triangular section - with smooth rounded corners - respectively, and
wherein :
- the housing (12) is made of plastic material, and
- the container part (120) comprises a stacking border (128) rising from the rim and from the external surface of the container part, said stacking border forming a line surrounding the front opened side and said line of the stacking border being discontinued.

16. A housing according to the precedent claim, wherein said housing comprises :
- a back side (122) comprising a water injection area (123), said water injection area comprising a hole (124) in the housing,
- a back cover (15) closing the hole (124) of the water injection area.

## Patentansprüche

1. Kapsel (1), enthaltend eine Getränkezutat (11), wie zum Beispiel Teeblätter, die zum Zubereiten eines Getränks wie z. B. Tee durch Einspritzung von heißem Wasser darin eingerichtet ist und umfasst:
- ein Gehäuse (12) zum Aufbewahren der Getränkezutat, wobei das Gehäuse umfasst:
- einen Behälterteil (120)
- eine vordere geöffnete Seite (121),
- einen Rand (125), der sich von der vorderen geöffneten Seite erstreckt, und
- eine vordere Abdeckung (13) und/oder eine Wand (14), die die vordere geöffnete Seite des Gehäuses verschließt bzw. verschließen, und
- wobei das Gehäuse (12) einen Querschnitt zeigt, der sich von der Rückseite zur Vorderseite bzw. von einem kreisförmigen Abschnitt zu einem global dreieckigen Abschnitt - mit glatten abgerundeten Ecken - ändert, und
**dadurch gekennzeichnet, dass:**
- das Gehäuse (12) aus Kunststoffmaterial hergestellt ist und
- der Behälterteil (120) einen sich vom Rand und von der Außenfläche des Behälterteils erhebenden Stapelrand (128) umfasst, der eine die vordere geöffnete Seite umgebende Linie bildet und die Linie des Stapelrandes unterbrochen ist.

2. Kapsel nach Anspruch 1, wobei das Kunststoffmaterial ein Thermoform-Polymer ist.

3. Kapsel nach Anspruch 1 oder 2, wobei das Kunststoffmaterial ein Kunststoffmaterial auf der Basis von Polypropylen (PP) ist.

4. Kapsel nach einem der vorstehenden Ansprüche, wobei der Stapelrand (128) entlang mindestens eines Abschnitts (129) unterbrochen ist.

5. Kapsel nach dem vorstehenden Anspruch, wobei sich der mindestens eine Abschnitt (129) entlang mindestens 3 mm erstreckt.

6. Kapsel nach Anspruch 4 oder 5, wobei sich der mindestens eine Abschnitt (129) entlang höchstens 10 mm erstreckt.

7. Kapsel nach einem der Ansprüche 4 bis 6, wobei der Stapelrand entlang mehrerer Abschnitte unterbrochen ist, wobei die Abschnitte symmetrisch um das Kapselgehäuse angeordnet sind.

8. Kapsel nach einem der vorstehenden Ansprüche, wobei der Stapelrand entlang derselben Seite des global dreieckigen Querschnitts des Gehäuses unterbrochen ist.

9. Verfahren nach einem der vorstehenden Ansprüche, wobei:
- das Gehäuse (12) zeigt:
• eine größte Höhe H, die zwischen 47,9 und 48,5 mm beträgt, und
• eine größte Breite W, die zwischen 36,7 und 37,3 mm beträgt, und
• eine größte Tiefe D, die zwischen 24,1 und 24,3 mm beträgt, und
- der Stapelrand sich von der Außenfläche des Behälters um mindestens 0,029 mm und vom Rand um mindestens 3,1 mm erhebt.

10. Kapsel nach dem vorstehenden Anspruch, wobei der Stapelrand (128) entlang dreier Abschnitte unterbrochen ist, wobei sich die Abschnitte entlang 5 mm erstrecken und sich die Abschnitte entlang derselben Seite des global dreieckigen Querschnitts des Gehäuses befinden.

11. Kapsel nach einem der vorstehenden Ansprüche, wobei das Gehäuse umfasst:
- eine Rückseite (122), umfassend einen Wassereinspritzbereich (123), wobei der Wassereinspritzbereich ein Loch (124) in dem Gehäuse umfasst,
- eine hintere Abdeckung (15), die das Loch (124) des Wassereinspritzbereichs verschließt.

12. Getränkeherstellungssystem, umfassend eine Kapsel nach einem der vorstehenden Ansprüche und ein Modul (2) zum Herstellen eines Getränks aus der Kapsel,
- wobei das Modul (2) umfasst:
• ein erstes Kapseleingriffselement (3), das relativ zu einem zweiten zusammenwirkenden Kapseleingriffselement (4) zwischen einer Kapselausgabeposition und einer Getränkeherstellungsposition verschoben werden kann,
• Mittel (5) zum aktiven Zurückziehen des ersten Kapseleingriffselements (3) von der Getränkeherstellungsposition in die Kapselausgabeposition, in der die Kapsel (1) aus dem ersten Kapseleingriffselement (3) ausgegeben wird,
wobei das verschiebbare erste Kapseleingriffselement (3) umfasst:
- eine Kapselaufnahme (31), wobei die Kapselaufnahmeform mit mindestens einem Teil der äußeren Form des Gehäuses (12) der Kapsel übereinstimmt und
- eine Wassernadel (6) zum Eindringen in die Kapsel durch das Loch (124) an der Rückseite des Kapselgehäuses und Einspritzen von Wasser in die Kapsel und
- eine ringförmige Dichtung (32) am inneren Umfangsrand der Kapselaufnahme.

13. Getränkeherstellungssystem nach dem vorstehenden Anspruch, wobei die ringförmige Dichtung (32) am inneren Umfangsrand (311) der Kapselaufnahme aus einem elastischen und flexiblen Material hergestellt ist.

14. Getränkeherstellungssystem nach Anspruch 12 oder 13, wobei:
- das Modul (2) so eingerichtet ist, dass in der Getränkeherstellungsposition die Vorderseite (121) der Kapsel vertikal ausgerichtet ist, und
- die Kapsel (1) eine derartige Randgröße zeigt, dass sich mindestens ein Teil des Rands (125) der Kapsel über mindestens einen Teil des ersten Kapseleingriffselements (3) hinaus erstreckt, sobald dieser mit dem ersten Kapseleingriffselement in Eingriff steht, und
- das Modul mindestens zwei Mittel (8) zum Halten des Randes der Kapsel umfasst, der sich über das erste Kapseleingriffselement hinaus erstreckt, wenn das erste Kapseleingriffselement (3) aus der Getränkeherstellungsposition in seine Kapselabgabeposition verschoben wird, wobei die mindestens zwei Haltemittel in zwei Teile des Randes der Kapsel eingreifen, die im oberen Teil der Kapsel positioniert sind,
wobei die Kapsel (1) so ausgelegt ist, dass der Stapelrand (128) der Kapsel am oberen Teil der Kapsel unterbrochen wird, sobald sie in der Getränkeherstellungsposition positioniert ist.

15. Gehäuse (12) einer Kapsel zum Halten einer Getränkezutat, wobei das Gehäuse umfasst:
- einen Behälterteil (120),
- eine vordere geöffnete Seite (121),
- einen Rand (125), der sich von der vorderen geöffneten Seite erstreckt, und
- das Gehäuse (12) einen Querschnitt zeigt, der sich von der Rückseite zur Vorderseite bzw. von einem kreisförmigen Abschnitt zu einem global dreieckigen Abschnitt - mit glatten abgerundeten Ecken - ändert, und
wobei:
- das Gehäuse (12) aus Kunststoffmaterial hergestellt ist und
- der Behälterteil (120) einen sich vom Rand und von der Außenfläche des Behälterteils erhebenden Stapelrand (128) umfasst, der eine die vordere geöffnete Seite umgebende Linie bildet und die Linie des Stapelrandes unterbrochen ist.

16. Gehäuse nach dem vorstehenden Anspruch, wobei das Gehäuse umfasst:
- eine Rückseite (122), umfassend einen Wassereinspritzbereich (123), wobei der Wassereinspritzbereich ein Loch (124) in dem Gehäuse umfasst,
- eine hintere Abdeckung (15), die das Loch (124) des Wassereinspritzbereichs verschließt.

## Revendications

1. Capsule (1) contenant un ingrédient de boisson (11), tel que de feuilles de thé, configurée pour préparer une boisson, telle que du thé, par injection d'eau chaude en son sein et comprenant :
- un boîtier (12) pour stocker ledit ingrédient de boisson, ledit boîtier comprenant :
- une partie de contenant (120)
- un côté ouvert avant (121),
- un rebord (125) s'étendant depuis le côté ouvert avant, et
- un couvercle avant (13) et/ou une paroi (14) fermant le côté ouvert avant du boîtier, et
- le boîtier (12) présentant une section transversale variant du côté arrière au côté avant d'une section circulaire à une section globalement triangulaire - avec des coins arrondis lisses - respectivement, et
**caractérisée en ce que** :
- le boîtier (12) est réalisé en matière plastique, et
- la partie de contenant (120) comprend une bordure d'empilement (128) s'élevant à partir du rebord et à partir de la surface externe de la partie de contenant, ladite bordure d'empilement formant une ligne entourant le côté ouvert avant et ladite ligne de la bordure d'empilement étant interrompue.

2. Capsule selon la revendication 1, dans laquelle la matière plastique est un polymère de thermoformage.

3. Capsule selon la revendication 1 ou 2, dans laquelle la matière plastique est une matière plastique à base de polypropylène (PP).

4. Capsule selon l'une quelconque des revendications précédentes, dans laquelle la bordure d'empilement (128) est interrompue le long d'au moins une partie (129).

5. Capsule selon la revendication précédente, dans laquelle l'au moins une partie (129) s'étend le long d'au moins 3 mm.

6. Capsule selon la revendication 4 ou 5, dans laquelle l'au moins une partie (129) s'étend le long d'au plus 10 mm.

7. Capsule selon l'une quelconque des revendications 4 à 6, dans laquelle la bordure d'empilement est interrompue le long de plusieurs parties, les parties étant disposées symétriquement autour du boîtier de capsule.

8. Capsule selon l'une quelconque des revendications précédentes, dans laquelle la bordure d'empilement est interrompue le long du même côté de la section transversale globalement triangulaire du boîtier.

9. Capsule selon l'une quelconque des revendications précédentes, dans laquelle :
- le boîtier (12) présente :
• une hauteur maximale H comprise entre 47,9 et 48,5 mm, et
• une largeur maximale W comprise entre 36,7 et 37,3 mm, et
• une profondeur maximale D comprise entre 24,1 et 24,3 mm, et
- la bordure d'empilement s'élève depuis la surface externe du contenant d'au moins 0,029 mm et depuis le rebord d'au moins 3,1 mm.

10. Capsule selon la revendication précédente, dans laquelle la bordure d'empilement (128) est interrompue le long de trois parties, lesdites parties s'étendant le long de 5 mm, et lesdites parties étant le long du même côté de la section transversale globalement triangulaire du boîtier.

11. Capsule selon l'une quelconque des revendications précédentes, dans laquelle le boîtier comprend :
- un côté arrière (122) comprenant une zone d'injection d'eau (123), ladite zone d'injection d'eau comprenant un trou (124) dans le boîtier,
- un couvercle arrière (15) fermant le trou (124) de la zone d'injection d'eau.

12. Système de production de boisson comprenant une capsule selon l'une quelconque des revendications précédentes et un module (2) pour la production d'une boisson à partir de la capsule,
- le module (2) comprenant :
• un premier élément d'engagement de capsule (3), qui peut être déplacé par rapport à un deuxième élément coopérant d'engagement de capsule (4) entre une position d'expulsion de capsule et une position de production de boisson,
• un moyen (5) pour rétracter activement le premier élément d'engagement avec la capsule (3) depuis la position de production d'une boisson vers la position d'expulsion de la capsule dans laquelle la capsule (1) est expulsée du premier élément d'engagement avec la capsule (3),
le premier élément d'engagement de capsule déplaçable (3) comprenant :
- un réceptacle à capsule (31), la forme dudit réceptacle à capsule correspondant à au moins une partie de la forme externe du boîtier (12) de la capsule, et
- une aiguille à eau (6) pour entrer dans la capsule à travers le trou (124) au niveau du côté arrière du boîtier de capsule et injecter de l'eau dans la capsule, et
- un joint annulaire (32) au niveau du bord périphérique interne du réceptacle à capsule.

13. Système de production de boisson selon la revendication précédente dans lequel le joint annulaire (32) au niveau du bord périphérique interne (311) du réceptacle à capsule est constitué d'un matériau élastique et flexible.

14. Système de production de boisson selon la revendication 12 ou 13, dans lequel :
- le module (2) est configuré de sorte que dans la position de production de boisson, le côté avant (121) de la capsule est orienté verticalement, et
- la capsule (1) présente une taille de rebord de telle sorte qu'au moins une partie du rebord (125) de la capsule s'étend au-delà d'au moins une partie du premier élément d'engagement de capsule (3) une fois qu'elle est engagée dans le premier élément d'engagement de capsule, et
- le module comprend au moins deux moyens (8) pour retenir le rebord de la capsule s'étendant au-delà du premier élément d'engagement de capsule lorsque ledit premier élément d'engagement de capsule (3) est déplacé de la position de production de boisson à sa position d'expulsion de capsule, lesdits au moins deux moyens de retenue venant en prise avec deux parties du rebord de la capsule positionnées dans la partie supérieure de la capsule,
dans lequel la capsule (1) est conçue de sorte que la bordure d'empilement (128) de la capsule est interrompue sur la partie supérieure de la capsule une fois positionnée dans la position de production de boisson.

15. Boîtier (12) d'une capsule pour contenir un ingrédient de boisson, ledit boîtier comprenant :
- une partie de contenant (120),
- un côté ouvert avant (121),
- un rebord (125) s'étendant depuis le côté ouvert avant, et
- le boîtier (12) présentant une section transversale variant du côté arrière au côté avant d'une section circulaire à une section globalement triangulaire - avec des coins arrondis lisses - respectivement, et
dans lequel :
- le boîtier (12) est réalisé en matière plastique, et
- la partie de contenant (120) comprend une bordure d'empilement (128) s'élevant à partir du rebord et à partir de la surface externe de la partie de contenant, ladite bordure d'empilement formant une ligne entourant le côté ouvert avant et ladite ligne de la bordure d'empilement étant interrompue.

16. Boîtier selon la revendication précédente, dans lequel ledit boîtier comprend :
- un côté arrière (122) comprenant une zone d'injection d'eau (123), ladite zone d'injection d'eau comprenant un trou (124) dans le boîtier,
- un couvercle arrière (15) fermant le trou (124) de la zone d'injection d'eau.
